# EUROPEAN PATENT APPLICATION

(11) **EP 4 576 291 A1**
(43) Date of publication of application: **25.06.2025**
(21) Application number: 23307239.6
(22) Date of filing: 18.12.2023
(51) Int. Cl.: H01M 10/04, H01M 50/15, H01M 50/536, H01M 50/103, H01M 50/533, H01M 50/553, B23K 37/04

(54) **PROCESS FOR MANUFACTURING AN ELECTROCHEMICAL CELL WITH SLIDED TOOLS**

(71) Applicant: Automotive Cells Company SE, 33520 Bruges (FR)
(72) Inventor: CHOI, Hangjune, 33200 Bordeaux (FR); ARDRINO, Thomas, 33320 Eysines (FR); BOOS, Gwenaelle, 33320 Eysines (FR); LAPORTE, Rémy, 33440 Ambares et Lagrave (FR)
(74) Representative: Alatis

(57) **Abstract**

The invention relates to a process for manufacturing an electrochemical cell comprising in particular:
- a step for providing two electrode assemblies (2, 3),
- a step of translating two supporting tools (36, 37) toward the electrode assemblies to insert each electrode assembly into one of the supporting tools,
- a step of pivoting two first pivoting flaps (54', 55') of the supporting tools, up to abutment against first tabs (30, 31),
- a step of pivoting two second pivoting flaps (54, 55) of the supporting tools, up to abutment against second tabs (32, 33),
- a first step of welding the first connection elements (4, 5) to the first collector,
- a second step of welding the second connection elements to the second collector.

## Description

### TECHNICAL FIELD OF THE INVENTION

The invention relates to the technical field of energy storage devices, and in particular to a process for manufacturing an electrochemical cell.

Electrochemical cells are used in electric or hybrid vehicles, i.e. powered at least partly by electrical energy, for example.

### BACKGROUND ART

Motor vehicles with electric or hybrid traction or propulsion comprise one or more battery modules connected to a power network to supply an electric motor (traction or propulsion).

The battery modules are grouped together in a housing to form a battery pack, which generally contains a mounting interface and connection terminals.

Each battery module comprises at least one electrochemical cell generating current by chemical reaction, for example of the lithium-ion (or Li-ion), Ni-Mh, Ni-Cd or lead type.

The electrochemical cell comprises two electrode assemblies, each comprising stacks of positive electrodes connected to each other by a positive electrode tab generally made of aluminum, and stacks of negative electrodes connected to each other by a negative electrode tab generally made of copper.

The two positive electrode tabs are welded to a positive current collector by ultrasonic welding. The two negative electrode tabs are ultrasonically welded to a negative current collector. The two electrode assemblies are thus joined by the two collectors.

Document US2021384513A1 describes an example of two current collectors, each associated with a terminal (positive or negative) and positioned on a top part of the electrode assemblies, between the electrode assemblies and a cover comprising the positive and negative terminals.

Each current collector is in the form of an L-shaped piece of sheet metal comprising a first wing for welding the current collector to the electrode tab by ultrasonic welding and a second wing for welding the current collector to a foot terminal by laser welding. A fold is made to connect the first wing to the second wing.

Each foot terminal is connected to one of the positive or negative terminals provided on the cover that closes a metal housing in which the two electrode assemblies are housed.

The current electrochemical cell manufacturing process for electrochemical cells comprising tabs on the top then comprises a preliminary ultrasonic welding step to weld the tabs of a positive electrode stack made of aluminum to each other and make a bundled positive tab, and a main ultrasonic welding step to weld the bundled tab to the positive current collector made of aluminum. However, the use of a laser beam welding is a potential replacement of the main ultrasonic welding.

The same steps are applied on the negative terminal side made of copper. However, the laser beam welding is also a potential replacement of the main ultrasonic welding.

Further, some electrochemical cells comprise two electrode assemblies with connecting elements positioned on their side faces.

However, it is difficult to apply a laser beam welding to the negative electrode bundled tab to the negative current collector, which are both made of copper, and does not working well with currently prevailing laser beam welding technology due to its high reflectivity. Just as it is equally difficult to apply an ultrasonic welding for the positive electrode bundled tab to the positive current collector, which are made of aluminum, and it does not have enough hardness for good ultrasonic welding.

These two different welding methods are, however, essential, but they are carried out in several stages, which lengthens the process time and at the risks of poor welding quality. The process is also complex to implement.

### DESCRIPTION OF THE INVENTION

The invention aims to solve some or all of the disadvantages of the prior art, in particular by proposing a faster process for manufacturing an electrochemical cell.

To this end, according to a first aspect of the invention, a process for manufacturing an electrochemical cell is proposed, comprising:
- a step of providing an electrochemical cell assembly comprising two electrode assemblies each comprising stacks of positive electrodes connected to each other and stacks of negative electrodes connected to each other, each electrode assembly comprising a first connection element at a first side face of the electrode assembly and being electrically connected to the negative electrode stacks, and a second connection element at a second side face of the electrode assembly and being electrically connected to the positive electrode stacks, the first connection element having a first tab in abutment against a first collector connected to a negative terminal of a cover, the second connection element having second tabs in abutment against a second collector connected to a positive terminal of the cover,
- a step of translating two supporting tools toward the electrode assemblies to insert each electrode assembly into one of the respective supporting tools, the two supporting tools forming an assembly tool embedding the electrode assemblies,
- a step of pivoting two first pivoting flaps, each rotatably mounted on a first side end of one of the supporting tools, up to abutment against the respective first tabs,
- a step of pivoting two second pivoting flaps, each rotatably mounted on a second side end of one of the supporting tools, up to abutment against the respective second tabs,
- a first step of welding the first connection elements to the first collector,
- a second step of welding the second connection elements to the second collector, and
- a step of translating the two supporting tools in a direction opposite to the electrode assemblies to remove each electrode assembly from the respective supporting tools.

The invention thus provides a faster and simpler method for manufacturing an electrochemical cell due to a single step of laser welding for the both sides.

The use of two electrode assemblies with connecting elements positioned on their side faces simplifies the manufacturing process and reduces the time of the process.

Alternatively, the first and second welding steps are performed by laser welding.

The manufacturing process is simplified and faster by using a single welding technic. An ultrasonic welding on the first connection elements is no more needed.

Alternatively, the first connection elements and the first collector are made of copper, the second connection elements and the second collector being made of aluminum.

Alternatively, the first and second steps of welding are performed through the first and second pivoting flaps and preferably through oblong holes formed in the pivoting flaps.

This enables to weld quicky the second connecting elements to the second collector.

The invention also relates to a tool for assembling two electrode assemblies of an electrochemical cell comprising two electrode assemblies each comprising stacks of positive electrodes connected to each other and stacks of negative electrodes connected to each other. Each electrode assembly comprises a first connection element at a first side face of the electrode assembly and is electrically connected to the negative electrode stacks and a second connection element at a second side face of the electrode assembly and being electrically connected to the positive electrode stacks. The assembly tool comprises two supporting tools comprising each a housing configured to receive one of the electrode assemblies, each supporting tool being configured to translate toward the two electrode assemblies.

This provides a faster and simpler method for manufacturing an electrochemical cell having connection elements at both side faces of the electrochemical cell.

Alternatively, each supporting tool comprises two holes at a bottom part of the supporting tool intended to receive two respective rods supported by a basement, the supporting tools being able to slide along the rods relative to the basement.

This provides a simpler solution for moving the supporting tools.

Alternatively, each first side end of the supporting tools comprises a first opening intended to be positioned opposite a first connection element of one of the electrode assemblies.

Alternatively, each first side end of the supporting tools comprises a first pivoting flap mounted rotatably relative to the supporting tool about a first rotation axis passing through one of the first openings, the first pivoting flaps being positioned in the first openings of the supporting tool.

Alternatively, each supporting tools comprises a second lateral end having a second opening intended to be positioned opposite the second connection element of one of the electrode assemblies.

Alternatively, each second side end of the supporting tool comprises a second pivoting flap mounted rotatably relative to the supporting tool about a second rotation axis passing through each second opening, the second pivoting flaps being positioned in the respective second openings of the supporting tool.

Alternatively, each pivoting flap comprises an oblong hole aligned parallel to the second rotation axis.

This enables to weld quicky and in a simple manner the first and second connecting elements to the first and second collectors.

### BRIEF DESCRIPTION OF THE FIGURES

Further features and advantages of the invention will become apparent from the following description, with reference to the appended figures, which illustrate:
- figure 1: a schematic view of two electrode assemblies of an electrochemical cell during a step of sliding two supporting tools toward two electrode assemblies;
- figure 2: a schematic view of each electrode assembly inserted into a respective supporting tool;
- figure 3: a schematic view of two pivoting flaps after a step of pivoting the pivoting flaps to bend the second connection elements;
- figure 4: a schematic view of the two second connection elements after a step of welding the second connection elements to a second collector.

For greater clarity, identical or similar elements are marked by identical reference signs throughout the figures.

### DETAILED DESCRIPTION OF PREFERRED EMBODIMENTS

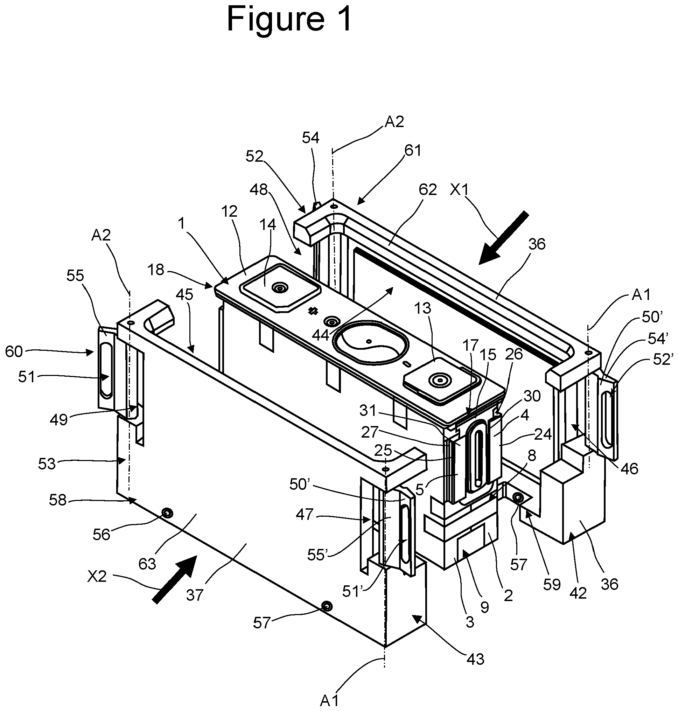

The invention relates to an electrochemical cell comprising two electrode assemblies **2, 3,** as illustrated in figure **1****.**

Each electrode assembly **2, 3** comprises stacks of negative electrodes connected to each other by a first connecting element **4, 5** made of copper and stacks of positive electrodes connected to each other by a second connecting element **6, 7** made of aluminium.

The electrochemical cell can be used, for example, in an electric or hybrid vehicle, i.e. powered at least partially by electrical energy.

The electrode stacks are separated by a separator and are known as a "stack". The interconnected positive electrodes are connected to a positive terminal, and the interconnected negative electrodes are connected to a negative terminal.

It is known to assemble, in series and/or in parallel, a plurality of electrochemical cells to create battery modules.

Several modules are grouped together in a housing to form a battery pack, which generally contains a mounting interface and connection terminals.

The positive and negative electrodes are housed in a hollow metal casing, generally made of aluminum. Once the electrode assembly has been integrated into the housing, an upper wall, in the form of a plate forming a cover **12,** is welded to the housing by laser, for example, to provide the structural connection and sealing of the electrochemical cell.

The housing has a parallelepiped shape with a rectangular cross-section and comprises two opposing longitudinal walls and two opposing transverse walls perpendicular to the longitudinal walls. A positive terminal **14** and a negative terminal **13** are arranged on the cover **12.**

The invention relates to a process for manufacturing an electrochemical cell comprising a step of providing two electrode assemblies **2, 3** including a first electrode assembly **2** and a second electrode assembly **3.** Each electrode assembly **2, 3** comprises stacks of positive electrodes connected to each other, and stacks of negative electrodes connected to each other.

As illustrated in figure 1, each electrode assembly **2, 3** comprises a first connection element **4, 5** at a first side face **8, 9** of the electrode assembly **2, 3.** Each first connection element **4, 5** is an extension of a part of the negative electrodes located inside the negative electrode stacks of the electrode assemblies **2, 3.** The parts of the negative electrodes are welded together to form the first connection element **4, 5.**

Each first connection element **4, 5** comprises a first foot terminal **26, 27** extending from the first side face **8, 9** of the electrode assemblies **2, 3.** Each first foot terminal **26, 27** is formed by an extension of the negative electrodes located inside the negative electrode stacks of the electrode assemblies **2, 3.** Each first connection element **4, 5** comprises also a first tab **30, 31** extending from the first foot terminal **26, 27** and a first bending section **24, 25** located between the foot terminal **26, 27** and the first tab **30, 31.**

Before the manufacturing process starts, each first tab **30, 31** projects from the first foot terminal **26, 27,** perpendicular to the first side face **8, 9** of the electrode assembly **2, 3** (not shown).

Each electrode assembly **2, 3** also comprises a second connecting element **6, 7** located at a second side face **10, 11** of the electrode assembly **2, 3.** Each second connection element **2, 3** is an extension of a part of the positive electrodes located inside the positive electrode stacks of the electrode assemblies **2, 3.** The parts of the positive electrodes are welded together to form the second connection element **2, 3.**

Each second connecting element **6, 7** comprises a second foot terminal **28, 29** extending from a second side face **10, 11** of the electrode assembly **2, 3.** Each second foot terminal **28, 29** is formed by an extension of the negative electrodes located inside the negative electrode stacks of the electrode assemblies **2, 3.** Each second connecting element **6, 7** also comprises a second tab **32, 33** extending from the second foot terminal **28, 29** and a second bending section **34, 35** located between the second foot terminal **28, 29** and the second tab **32, 33.**

Before the manufacturing process starts, each second tab **32, 33** projects from the second foot terminal **28, 29** and perpendicularly from the second side face **10, 11** of the electrode assembly **2, 3.**

The two electrode assemblies **2, 3** are joined together to form an electrochemical cell assembly **1** comprising a cover **12** having a negative terminal **13** electrically connected to a first collector **15** and a positive terminal **14** electrically connected to a second collector **16.** The two electrode assemblies **2, 3** are aligned parallel and positioned perpendicular to the cover **12.**

Each collector **15, 16** is in the form of a tab and projects from an inner face of the cover **12.** Each collector **15, 16** is positioned on an end portion **17, 18** of the cover **12.**

The first connection elements **4, 5** and the first collector **15** are made of copper. The second connecting elements **6, 7** and the second collector **16** are made of aluminum.

The first tabs **30, 31** and the first collector **15** have a rectangular shape.

The first connection elements **4, 5** are bent to have each first tab **30, 31** in abutment against a first collector **15.** Each first tab **30, 31** comprises a first end portions **22', 23'** in abutment against the first collector **15.** The second connection elements **6, 7** are also bent to have each second tab **32, 33** in abutment against a second collector **16.** Each second tab **32, 33** comprises second end portions **22, 23** in abutment against the second collector **16.**

The manufacturing process comprises a step of translating two supporting tools **36, 37** toward the electrode assemblies **2, 3** to insert each electrode assembly **2, 3** into one of the supporting tools **36, 37,** as shown in figure 1.

Each supporting tool **36, 37** comprises two holes **56, 57** at a bottom part 58, 59 of the supporting tool **36, 37** intended to receive two respective rods supported by a basement. The supporting tools **36, 37** can slide along the rods relative to the basement. The rods are guiding means enabling the supporting tools **36, 37** to translate according to the directions **X1** and **X2.**

The holes **56, 57** extend across the supporting tool **36, 37** perpendicularly to a main wall **62, 63** of the supporting tool **36, 37.**

Each supporting tool **36, 37** has a U-shaped section. First side ends **42, 43** and second side ends **52, 53** extend perpendicularly from the main wall **62, 63.**

The rods are parallel to each other and extends below the two electrode assemblies **2, 3.**

A first supporting tool **36** translates toward a first electrode assembly **2** according to a first direction **X1** and a second supporting tool **37** translates toward a second electrode assembly **3** according to a second direction **X2,** parallel and opposite to the first direction **X1.** The two supporting tools **36, 37** form an assembly tool embedding the electrode assemblies **2, 3.**

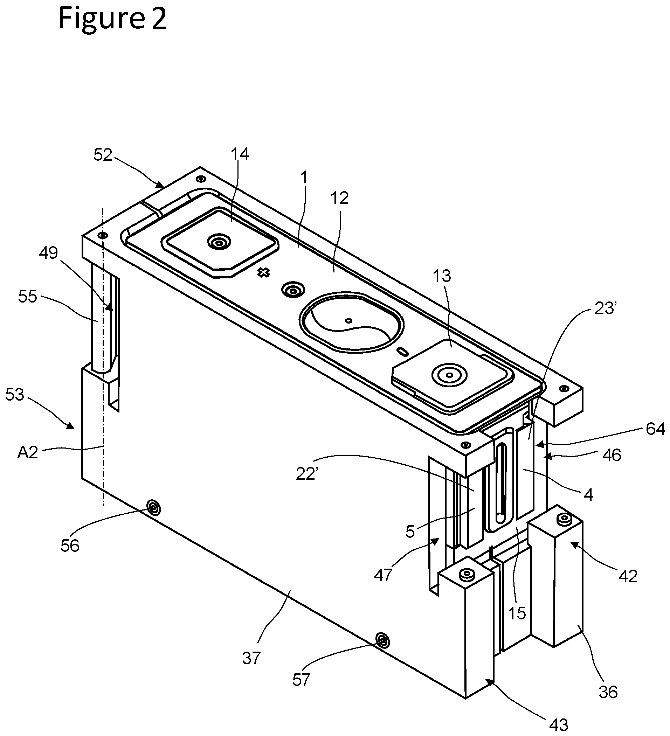

The first electrode assembly **2** is inserted into the first supporting tool **36** and the second electrode assembly **3** is inserted into the second supporting tool **37** as illustrated in figure 2.

Each first side end **42, 43** comprises a first opening **46, 47** intended to be positioned opposite a first connection element **4, 5** of one of the electrode assemblies 2, 3. The first openings **46, 47** have a rectangular shape.

After translation, first side ends **42, 43** and second side ends **52, 53** of the respective supporting tools **36, 37** are in contact at the bottom part **58** of the supporting tools **36, 37** and the assembly tool is formed, as shown in figure 2.

The assembly tool comprises two lateral windows **64, 65** delimiting the first and second connection elements **4, 5, 6, 7** respectively.

Each respective supporting tools **36, 37** comprises two first pivoting flaps **54', 55',** each rotatably mounted on a first side end **42, 43** of one of the supporting tools **36, 37.**

Each first side end **42, 43** of the supporting tools **36, 37** comprises a first pivoting flap **54', 55'** mounted rotatably relative to the supporting tool **36, 37** about a first rotation axis **A1** passing through one of the first openings **46, 47.** The first pivoting flaps **54', 55'** are positioned in the first openings **46, 47** of the supporting tool **36, 37.**

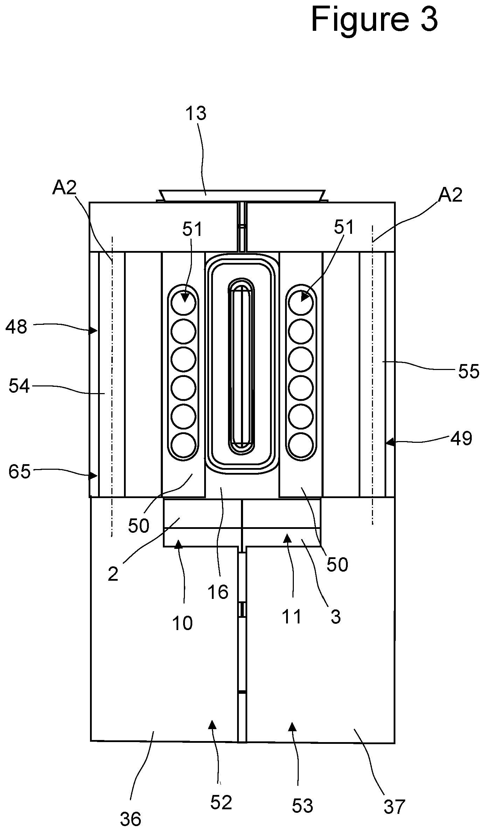

The supporting tools **36, 37** comprises two second pivoting flaps **54, 55,** each rotatably mounted on a second side end **52, 53** of one of the supporting tools **36,** 37, as illustrated in figure 3.

The pivoting flaps **54, 55, 54', 55'** have a rectangular shape with a curved shape.

The second side end **52, 53** have a second opening **48, 49** intended to be positioned in front a second connection element **6, 7** of one of the electrode assemblies **2, 3.**

The second pivoting flaps **54, 55** are positioned in the second openings **48, 49** respectively and are pivotable relative to the supporting tools **36, 37** about a second rotation axis **A2** passing through each second opening **48, 49.**

The pivoting flaps **54, 55, 54', 55'** are positioned at an upper part **60, 61** of the supporting tools **36, 37.**

The manufacturing process then comprises a step of pivoting the two first pivoting flaps **54', 55'** so that they are in abutment against the respective first tabs **30, 31** of the first connection element **4, 5** and a step of pivoting the two second pivoting flaps **54, 55** so that they are in abutment against the respective second tabs **32, 33** of the second connection element **6, 7.**

The manufacturing process then comprises a first step of welding the first end portions **22', 23'** of the first connection elements **4, 5** to the first collector **15** by laser welding.

The manufacturing process then comprises a second step of welding the second end portions **22, 23** of the second tabs **32, 33** to the second collector **16** by laser welding.

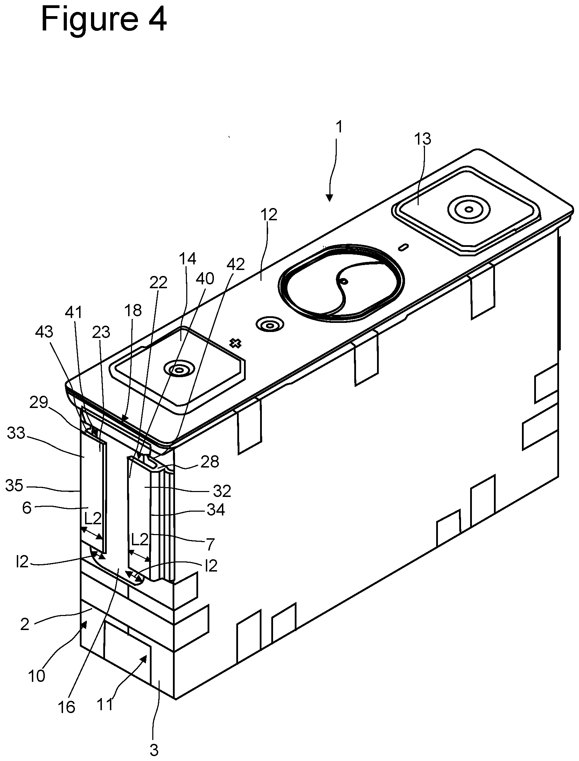

The second collector **16** comprises two second lateral areas **40, 41** which are each positioned between one of the second end portions **22, 23** of the second tabs **32, 33** and a second inner part **42, 43** of the second foot terminal **28, 29** as shown in figure 4. The first collector **15** and the first tabs **30, 31** are arranged in the same manner.

The second tabs **32, 33** and the second collector **16** have a rectangular shape.

Each first pivoting flap **54', 55'** comprises a first end **50'** having a first oblong hole **51', 52',** for instance, aligned parallel to the first rotation axis **A1.** The first oblong holes **51', 52'** extend along quite the whole first pivoting flap **54', 55'** heigh. Alternatively, each first pivoting flap **54', 55'** can comprise holes with a different shape, as circular shape, for instance.

During the first welding step, laser welding is performed through the first pivoting flaps **54', 55'** and preferably through oblong holes **51', 52'** formed in the first pivoting flaps **54', 55'.**

The first end portions **22', 23'** are welded to the first collectors **15** over a width of at least **3** mm and preferably at least **6** mm.

This proportion ensures a strong weld and enables the second tab to be bent correctly.

This width is greater than or equal to a quarter of the width of the first tab **30, 31** and less than or equal to half the width of the first tab **30, 31.**

Each second pivoting flap **54, 55** comprises a second end **50** having a second oblong hole **51** aligned parallel to the second rotation axis **A2.** The oblong holes **51** extend along quite the whole second pivoting flap **54, 55** heigh. Alternatively, each second pivoting flap **54, 55** can comprise holes with a different shape, as circular shape, for instance.

During the second welding step, laser welding is performed through the second pivoting flaps **54, 55** and preferably through the second oblong holes **51** formed in the second pivoting flaps **54, 55.**

The second end portions **22, 23** are welded to the respective second collectors **16** over a second width l**2** of at least **3** mm and preferably at least **6** mm, as illustrated in figure 4.

This proportion ensures a strong weld and enables the second tab to be bent correctly.

The second width l**2** is greater than or equal to a quarter of the width L**2** of the second tab **32, 33** and less than or equal to half the width L**2** of the second tab **32, 33.**

After the first and second welding steps, each supporting tool **36, 37** translates in a reverse direction, opposite to the directions **X1** and **X2,** along the rods to open the assembly tool and remove the electrochemical cell assembly **1** from the assembly tool.

Naturally, the invention is described in the foregoing by way of example. It is understood that the person skilled in the art will be able to realize different variants of the invention without departing from the scope of the invention.

It is emphasized that all features, as they become apparent to a person skilled in the art from the present description, the drawings and the attached claims, even if in concrete terms they have only been described in connection with other specific features, both individually and in any combinations, may be combined with other features or groups of features disclosed herein, provided that this has not been expressly ruled out or that technical circumstances render such combinations impossible or meaningless.

## Claims

1. Process for manufacturing an electrochemical cell, **characterized in that** it comprises:
- a step of providing an electrochemical cell assembly (1) comprising two electrode assemblies (2, 3) each comprising stacks of positive electrodes connected to each other and stacks of negative electrodes connected to each other, each electrode assembly (2, 3) comprising a first connection element (4, 5) at a first side face (8, 9) of the electrode assembly (2, 3) and being electrically connected to the negative electrode stacks, and a second connection element (6, 7) at a second side face (10, 11) of the electrode assembly (2, 3) and being electrically connected to the positive electrode stacks, the first connection element (4, 5) comprising a first tab (30, 31) in abutment against a first collector (15) connected to a negative terminal (13) of a cover (12), the second connection element (6, 7) comprising a second tabs (32, 33) in abutment against a second collector (16) connected to a positive terminal (14) of the cover (12),
- a step of translating two supporting tools (36, 37) toward the electrode assemblies (2, 3) to insert each electrode assembly (2, 3) into one of the respective supporting tools (36, 37),
- a step of pivoting two first pivoting flaps (54', 55') so that they are in abutment against the respective first tabs (30, 31), each first pivoting flaps (54', 55') being rotatably mounted on a first side end (42,43) of one of the supporting tools (36, 37),
- a step of pivoting two second pivoting flaps (54, 55) so that they are in abutment against the respective second tabs (32, 33), each second pivoting flaps (54, 55) being rotatably mounted on a second side end (52, 53) of one of the supporting tools (36, 37),
- a first step of welding the first connection elements (4, 5) to the first collector (15),
- a second step of welding the second connection elements (6, 7) to the second collector (16), and
- a step of translating the two supporting tools (36, 37) in a direction opposite to the electrode assemblies (2, 3) to remove each electrode assembly (2, 3) from the respective supporting tools (36, 37).

2. Manufacturing process according to claim 1, **characterized in that** the first and second welding steps are performed by laser welding.

3. Manufacturing process according to claim 1 or 2, **characterized in that** the first connection elements (4, 5) and the first collector (15) are made of copper, the second connection elements (6, 7) and the second collector (16) being made of aluminum.

4. Manufacturing process according to claims 1 to 3, **characterized in that** the first and second steps of welding are performed through the pivoting flaps (54, 55, 54', 55') and preferably through oblong holes (51, 51', 52') formed in the pivoting flaps (54, 55, 54', 55').

5. Tool for assembling two electrode assemblies (2, 3) of an electrochemical cell (1) comprising two electrode assemblies (2, 3) each comprising stacks of positive electrodes connected to each other and stacks of negative electrodes connected to each other, each electrode assembly (2, 3) comprising a first connection element (4, 5) at a first side face (8, 9) of the electrode assembly (2, 3) and being electrically connected to the negative electrode stacks, and a second connection element (6, 7) at a second side face (10, 11) of the electrode assembly (2, 3) and being electrically connected to the positive electrode stacks, **characterized in that** the assembly tool comprises two supporting tools (36, 37) comprising each a housing (44, 45) configured to receive one of the electrode assemblies (2, 3), each supporting tool (36, 37) being configured to translate toward the two electrode assemblies (2, 3).

6. Assembly tool according to claim 5, **characterized in that** each supporting tool (36, 37) comprises two holes (56, 57) at a bottom part (58, 59) of the supporting tool (36, 37) intended to receive two respective rods supported by a basement, the supporting tools (36, 37) being able to slide along the rods relative to the basement.

7. Assembly tool according to any one of claims 5 or 6, **characterized in that** each first side end (42, 43) of the supporting tools (36, 37) comprises a first opening (46, 47) intended to be positioned opposite a first connection element (4, 5) of one of the electrode assemblies (2, 3).

8. Assembly tool according to claim 7, **characterized in that** each first side end (42, 43) of the supporting tools (36, 37) comprises a first pivoting flap (54', 55') mounted rotatably relative to the supporting tool (36, 37) about a first rotation axis (A1) passing through one of the first openings (46,47), the first pivoting flaps (54', 55') being positioned in the first openings (46, 47) of the supporting tool (36, 37).

9. Assembly tool according to any one of claims 5 to 8, **characterized in that** each supporting tools (36, 37) comprises a second lateral end (40, 41) having a second opening (48, 49) intended to be positioned opposite the second connection element (6, 7) of one of the electrode assemblies (2, 3).

10. Assembly tool according to claim 9, **characterized in that** each second side end (52, 53) of the supporting tool (36, 37) comprises a second pivoting flap (54, 55) mounted rotatably relative to the supporting tool (36, 37) about a second rotation axis (A2) passing through each second opening (48, 49), the second pivoting flaps (54, 55) being positioned in the respective second openings (48, 49) of the supporting tool (36, 37).

11. Assembly tool according to any one of claims to 10, **characterized in that** each pivoting flap (54, 55, 54', 55') comprises an oblong hole (51, 51', 52') aligned parallel to the second rotation axis (A2).
